(19) **Europäisches Patentamt / European Patent Office / Office européen des brevets**

(11) **EP 4 699 996 A1**

(12) **EUROPEAN PATENT APPLICATION**
published in accordance with Art. 153(4) EPC

(43) Date of publication:
**25.02.2026 Bulletin 2026/09**

(21) Application number: **24831354.6**

(22) Date of filing: **25.03.2024**

(51) International Patent Classification (IPC):
**C04B 18/14** $^{(2006.01)}$     **C04B 28/08** $^{(2006.01)}$
**C04B 111/34** $^{(2006.01)}$

(52) Cooperative Patent Classification (CPC):
**C04B 18/14; C04B 28/08;** C04B 2111/34

(86) International application number:
**PCT/JP2024/011686**

(87) International publication number:
**WO 2025/004477 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023 JP 2023106895**

(71) Applicant: **JFE Steel Corporation**
**Tokyo, 100-0011 (JP)**

(72) Inventors:
• **NAGATA Kazehiko**
 **Tokyo 100-0011 (JP)**
• **INOUE Yotaro**
 **Tokyo 100-0011 (JP)**
• **HINO Yuta**
 **Tokyo 100-0011 (JP)**

(74) Representative: **Grünecker Patent- und Rechtsanwälte PartG mbB**
**Leopoldstraße 4**
**80802 München (DE)**

(54) **COMPOSITE OXIDE, CEMENT ADMIXTURE OR BLENDED CEMENT CONTAINING COMPOSITE OXIDE, AND CONCRETE**

(57)     The present invention provides a composite oxide that, when used to manufacture concrete, makes it possible to manufacture concrete with reduced autogenous shrinkage. The composite oxide includes CaO, MgO, and $Al_2O_3$ and is characterized in that: a basicity B3 is 1.4 or higher and 3.0 or lower, the basicity B3 being a value obtained by dividing a sum of a mass percentage of the CaO, a mass percentage of the MgO, and a mass percentage of the $Al_2O_3$ included in the composite oxide by a mass percentage of $SiO_2$ included in the composite oxide; a total amount of iron included in the composite oxide is 0.4 mass% or more and 8.0 mass% or less; and a specific surface area of the composite oxide is 3000 $cm^2/g$ or larger.

**EP 4 699 996 A1**

**Description**

Technical Field

The present invention relates to a composite oxide, a cement admixture or blended cement including the composite oxide, and concrete. In particular, the present invention relates to a composite oxide that has excellent latent hydraulicity and can be suitably used for concrete that experiences minor autogenous shrinkage, as well as to a cement admixture or blended cement including the composite oxide, and concrete.

Background Art

Ground granulated blast-furnace slag is obtained by finely pulverizing water-granulated blast-furnace slag generated from water-granulating blast-furnace slag that has been rapidly cooled by being sprayed with high-pressure water while in a molten state. Ground granulated blast-furnace slag is amorphous and latently has hydraulicity. As such, ground granulated blast-furnace slag is used as a raw material of blast-furnace cement by being mixed with ordinary cement, etc. or as an admixture of cement.

As a first advantage of using ground granulated blast-furnace slag as a raw material of blast-furnace cement, etc., it can be pointed out that compared with ordinary Portland cement (NC), ground granulated blast-furnace slag generates less heat in a hydration reaction with water. As a second advantage, it can be pointed out that concrete that uses ground granulated blast-furnace slag as a raw material of blast-furnace cement has high long-term strength and salt-blocking properties and can inhibit an alkali-silica reaction. Further, as a third advantage, it can be pointed out that reducing the amount used of ordinary Portland cement (NC), etc., which emits a large amount of carbon dioxide, in manufacturing concrete can reduce the environmental burden.

On the other hand, as one disadvantage of using ground granulated blast-furnace slag as a raw material of blast-furnace cement, there is a problem that concrete obtained by using ground granulated blast-furnace slag as a raw material of blast-furnace cement experiences major autogenous shrinkage.

From these viewpoints, methods for reducing the autogenous shrinkage of concrete using ground granulated blast-furnace slag have been proposed. As methods for reducing the autogenous shrinkage of concrete using ground granulated blast-furnace slag, a technique that adds an expanding agent and a shrinkage-reducing agent to a raw material of blast-furnace cement, and many techniques that use a blast-furnace slag fine aggregate as the fine aggregate to be used for concrete have been proposed.

A method that reduces the autogenous shrinkage of concrete by containing calcium carbonate and gypsum in addition to Portland cement and blast-furnace slag has been proposed (e.g., Patent Literature 1). Specifically, Patent Literature 1 describes a concrete binder that contains Portland cement, blast-furnace slag, calcium carbonate, and gypsum, with the content of the blast-furnace slag being more than 5 mass% and 70 mass% or less, the content of the calcium carbonate being 2 mass% or more and 11 mass% or less, and the content of the gypsum in terms of anhydride being 5 mass% or more and 10 mass% or less and not less than 0.9 times the content of the calcium carbonate.

Further, a method that uses paraffin and nitrite in addition to ground granulated blast-furnace slag of which 40% or more passes through a 10 $\mu$m-sieve and 15% or less remains on a 45 $\mu$m-sieve has been proposed (e.g., Patent Literature 2). Specifically, Patent Literature 2 describes concrete that, even when using ground granulated blast-furnace slag, favorably exhibits its initial strength in a low-temperature environment, can secure freeze-thaw resistance, as well as experiences minor drying shrinkage.

Patent Literature 3 proposes a low-shrinkage AE concrete composite that is an AE concrete composite prepared using blast-furnace cement as the cement, such that a hardened body obtained from it has a low drying shrinkage ratio, a low neutralization rate, and high resistance to freezing and thawing, all at the same time. The low-shrinkage AE concrete composite described in Patent Literature 3 is manufactured using blast-furnace cement as the cement, adjusting the ratio of coarse grains as part of a fine aggregate to be within a predetermined range, using a specific blast-furnace slag fine aggregate at a ratio of 100 to 750 kg, using water at a ratio of 135 to 175 kg, per cubic meter of the concrete, and adjusting the water-cement ratio to 30 to 60%.

Citation List

Patent Literature

Patent Literature 1: JP-A-2016-23105
Patent Literature 2: JP-A-2022-89256

Patent Literature 3: JP-A-2011-6305

Summary of Invention

Technical Problem

However, the above-described conventional technologies still have the following problems to be solved. Specifically, one problem with the concrete binder, etc. described in Patent Literatures 1 to 3 is that, to reduce the autogenous shrinkage of concrete, an expanding agent, an additive such as a shrinkage-reducing agent, and a blast-furnace slag fine aggregate need be used for ground granulated blast-furnace slag. Moreover, such expanding agent, additive, and blast-furnace slag fine aggregate needed to manufacture concrete with reduced autogenous shrinkage are a major contributing factor in increasing the raw material cost. Further, manufacturing concrete with reduced autogenous shrinkage requires a step of adding many additives, a step of mixing in a blast-furnace slag fine aggregate, a step of designing the composition of concrete materials, etc. As a result, the number of manufacturing steps for manufacturing concrete with reduced autogenous shrinkage increases.

Having been conceived in view of these circumstances, the present invention aims to provide a composite oxide that has excellent latent hydraulicity and that, when used to manufacture concrete, makes it possible to manufacture concrete with reduced autogenous shrinkage.

Solution to Problem

To solve the above-described problems, the present inventors conducted studies from a viewpoint of adjusting the components of slag as a result of various experiments, and gained an insight that adding a modifier containing iron oxide, etc. to a raw material of concrete was extremely effective for enhancing the latent hydraulicity of the raw material and reducing the autogenous shrinkage of the obtained concrete. The present invention has been developed based on this insight, and the gist thereof is as follows.

That is, a composite oxide according to the present invention that advantageously solves the above-described problems is a composite oxide including CaO, MgO, and $Al_2O_3$, characterized in that: a basicity B3 is 1.4 or higher and 3.0 or lower, the basicity B3 being a value obtained by dividing a sum of a mass percentage of the CaO, a mass percentage of the MgO, and a mass percentage of the $Al_2O_3$ included in the composite oxide by a mass percentage of $SiO_2$ included in the composite oxide; a total amount of iron included in the composite oxide is 0.4 mass% or more and 8.0 mass% or less; and a specific surface area of the composite oxide is 3000 $cm^2$/g or larger.

The composite oxide according to the present invention is considered possible to be a more preferable solution in that, for example: (a) the composite oxide is obtained by adding a modifier to slag, and (b) a vitrification ratio of the composite oxide is 90% or higher. A cement admixture or blended cement according to the present invention is (c) formed by including the above-described composite oxide. Further, concrete according to the present invention is (d) formed by including the above-described composite oxide.

Advantageous Effect of Invention

The present invention can provide concrete with drastically reduced autogenous shrinkage by using, for the concrete, a cement raw material with excellent latent hydraulicity obtained by substituting part of the cement raw material with a composite oxide.

Description of Embodiments

[First Embodiment]

A composite oxide according to a first embodiment will be described. A composite oxide according to this embodiment is a composite oxide including CaO, MgO, and $Al_2O_3$, characterized in that: a basicity B3 is 1.4 or higher and 3.0 or lower, the basicity B3 being a value obtained by dividing a sum of a mass percentage of the CaO, a mass percentage of the MgO, and a mass percentage of the $Al_2O_3$ included in the composite oxide by a mass percentage of $SiO_2$ included in the composite oxide; a total amount of iron included in the composite oxide is 0.4 mass% or more and 8.0 mass% or less; and a specific surface area of the composite oxide is 3000 $cm^2$/g or larger. In the following, each component included in the composite oxide according to this embodiment will be described.

The composite oxide according to this embodiment includes CaO, MgO, and $Al_2O_3$ as its constituent components. That is, as long as the composite oxide includes CaO, MgO, and $Al_2O_3$, it may be constituted by preparing and mixing together respectively materials including each of these constituent components, or a material including these constituent components may be used as is. Alternatively, the composite oxide may be used with a missing constituent component from a material including some of these constituent components added thereto. The composite oxide according to this embodiment further includes $SiO_2$ as its constituent component.

The composite oxide is characterized in that the basicity B3 is 1.4 or higher and 3.0 or lower, the basicity B3 being a value obtained by dividing the sum of the mass percentage of CaO, the mass percentage of MgO, and the mass percentage of $Al_2O_3$ included in the composite oxide by the mass percentage of $SiO_2$ included in the composite oxide. Setting the basicity B3 to such a range makes it possible to obtain a composite oxide that has appropriate latent hydraulicity when used as an admixture of cement. To calculate the basicity B3 of the composite oxide, first, each of the mass percentage of CaO, the mass percentage of MgO, and the mass percentage of $Al_2O_3$ included in the composite oxide is calculated, and then the sum of these calculated mass percentages is calculated.

Next, the mass percentage of $SiO_2$ included in the composite oxide is calculated. Thus, the basicity B3 of the composite oxide is calculated using the calculated sum of the mass percentage of CaO, the mass percentage of MgO, and the mass percentage of $Al_2O_3$, and the calculated mass percentage of $SiO_2$, included in the composite oxide. The basicity B3 can be calculated by dividing the sum of the mass percentage of CaO, the mass percentage of MgO, and the mass percentage of $Al_2O_3$ by the mass percentage of $SiO_2$, included in the composite oxide. The basicity B3 may be calculated, for example, by the following Relational Expression (1):

[Expression 1]

$$\text{Basicity B3} \;=\; \frac{(CaO + MgO + Al_2O_3)}{SiO_2} \qquad (1)$$

In this Relational Expression (1), CaO, MgO, $Al_2O_3$, and $SiO_2$ represent the mass percentages of calcium oxide, magnesium oxide, aluminum oxide, and silicon dioxide, respectively.

It is preferable that the basicity B3 calculated from the respective constituent components included in the composite oxide according to this embodiment be 1.4 or higher. The basicity B3 being 1.4 or higher is preferable because then, as a glass component included in the composite oxide melts, Ca, Si, etc. elute and a hydration reaction progresses. The basicity B3 being 3.0 or lower is preferable because then appropriate latent hydraulicity of the composite oxide can be secured and the strength of concrete formed by including the composite oxide can be fully exhibited. The basicity B3 can be set by appropriately adjusting it within the aforementioned range by adjusting the values of the respective constituent components included in the composite oxide according to this embodiment.

Specifically, to adjust the basicity B3 to be within the aforementioned range, a constituent component missing from the composite oxide and the amount of that constituent component are determined. Then, adjusting the basicity B3 to be within the aforementioned range can be achieved by adding various modifiers including the missing constituent component to the composite oxide.

The composite oxide according to this embodiment is characterized in that a total amount of iron (T. Fe) included in the composite oxide is 0.4 mass% or more and 8.0 mass% or less. Generally, the total amount of iron (T. Fe) included in blast-furnace slag generated as a by-product from a blast furnace is less than 0.4 mass%. Therefore, even when, for example, blast-furnace slag generated as a by-product from a blast furnace is used as a raw material of blast-furnace cement and concrete is manufactured by including this blast-furnace cement, the autogenous shrinkability thereof cannot be reduced. In this respect, the composite oxide according to this embodiment has such a composition in which B3 calculated from Relational Expression (1) given above is an appropriate value. For example, a modifier containing iron oxide may be added to the composite oxide to thereby set the total amount of iron (T. Fe) in the composite oxide including the modifier to 0.4 mass% or more and 8.0 mass% or less. Limiting the total amount of iron (T. Fe) included in the composite oxide to such a range makes it possible to use the composite oxide as blended cement or a cement admixture with the latent hydraulicity secured, as well as to obtain concrete that experiences minor autogenous shrinkage compared with concrete formed by including ground granulated blast-furnace slag.

That is, in the composite oxide according to this embodiment, with a focus on the total amount of iron (T. Fe) therein, this total amount of iron (T. Fe) is increased to make it possible to manufacture concrete with reduced autogenous shrinkability. The total amount of iron (T. Fe) included in the composite oxide being 0.4 mass% or more is preferable because then, when the composite oxide is used as blended cement, adequate exhibition of strength and autogenous shrinkability of the concrete formed from this blended cement can be achieved. The total amount of iron (T. Fe) being 1.0 mass% or more is more preferable. The total amount of iron (T. Fe) being 2.0 mass% or more is even more preferable. The total amount of iron (T. Fe) being 3.0 mass% or more is particularly preferable. The total amount of iron (T. Fe) included in the composite oxide being 8.0 mass% or less is preferable because then, when this composite oxide is used as a cement admixture, the latent hydraulicity is unlikely to decrease.

It is preferable that the specific surface area of the composite oxide be 3000 $cm^2/g$ or larger. Thus specifying the specific surface area of the composite oxide is preferable because then the composite oxide can have latent hydraulicity enough to meet the specification of the activity index provided in JIS R 6206: 2013, for example. That is, in the composite oxide according to this embodiment, setting the specific surface area of the composite oxide to 3000 cm$^2$/g or larger allows concrete including this composite oxide to be used as a concrete product. It is preferable that the specific surface area of the composite oxide be 10000 cm$^2$ or smaller.

Thus, the composite oxide according to this embodiment includes blast-furnace slag and further has an iron oxide-containing modifier added thereto, increasing the total amount of iron (T. Fe) more than that included in the ordinary blast-furnace slag, so as to set the total amount of iron (T. Fe) to 0.4 mass% or more. This contributes significantly to reducing the autogenous shrinkability of concrete formed by including the composite oxide.

As has been described above, the invention according to the first embodiment can provide a composite oxide that, when used to manufacture concrete, makes it possible to manufacture concrete with reduced autogenous shrinkage.

[Second Embodiment]

A composite oxide according to a second embodiment will be described. The composite oxide according to this embodiment is the composite oxide according to the above-described embodiment and characterized in that it is obtained by adding a modifier to slag. In the following, each component contained in the composite oxide according to this embodiment will be described.

<Slag, Such as Steel Slag>

The slag included in the composite oxide according to this embodiment may be steel slag or non-ferrous metal slag that is manufactured in a metal manufacturing process, or may be molten slag from waste heating that is manufactured in a waste heat-melting process. The steel slag is not particularly limited, and may be, for example, blast-furnace slag such as water-granulated blast-furnace slag or slowly cooled blast-furnace slag, or may be steelmaking slag such as converter slag or electric furnace slag. Alternatively, the slag may be slag that is generated as a by-product in a direct iron ore smelting reduction process, a direct ironmaking process, etc. The non-ferrous metal slag may be ferronickel slag, copper slag, etc. The molten slag from waste heating may be waste molten slag, sewage sludge slag, etc.

Thus, while various types of slag can be used as the slag included in the composite oxide according to this embodiment, a description will be given of some types of slag that can be used for the composite oxide from the viewpoints of energy conservation, resource conservation, and carbon dioxide reduction.

(Blast-Furnace Slag)

In a process of feeding coke, limestone, etc. to iron ore charged in a blast furnace and recovering iron from iron ore by a reduction method, the blast-furnace slag included in the composite oxide according to this embodiment is recovered as a product with lower density than pig iron. About 290 to 300 kg of blast-furnace slag per 1.0 ton of pig iron is generated as a by-product. Water-granulated blast-furnace slag obtained by rapidly cooling blast-furnace slag in a molten state by spraying it with high-pressure water has latent hydraulicity. While water-granulated blast-furnace slag does not harden when simply kneaded with water, when alkali with a pH of about 12.0 or higher coexists, a hyalin substance constituting a part of the blast-furnace slag decomposes, so that Ca and Si elute and a hydration reaction progresses.

With its temperature exceeding 1400°C, blast-furnace slag generated as a by-product from a blast furnace is in a molten state. When this blast-furnace slag in a molten state is sprayed with high-pressure water and rapidly cooled, the blast-furnace slag in a molten state turns into water-granulated blast-furnace slag. The water-granulated blast-furnace slag is in a sandy form and vitrified (amorphous), as it is generated as a result of blast-furnace slag in a molten state being rapidly cooled. The water-granulated blast-furnace slag has a capacity for undergoing a hydration reaction. Here, the blast-furnace slag used for manufacturing the composite oxide according to this embodiment may be blast-furnace slag in a molten state, or may be formed from blast-furnace slag that is blast-furnace slag in a molten state having been cooled and then melted again.

Blast-furnace slag is slag that is generated as a by-product in a blast furnace in a blast furnace-converter process. Specifically, in the blast furnace-converter process, the blast-furnace slag included in the composite oxide is obtained in a pig iron manufacturing process of smelting molten pig iron with a C concentration of 4.5 to 5.0 mass% by charging iron ore ($Fe_2O_3$) as a raw material into a blast furnace along with coke (carbon source) as a reducing material.

Further, as the blast-furnace slag included in the composite oxide, blast-furnace slag that is generated as a by-product by the so-called blast furnace-converter process may be used. The constituent components of blast-furnace slag generated as a by-product by the blast furnace-converter process are substantially the same as the constituent components included in the composite oxide according to this embodiment.

Therefore, simply adjusting the total amount of iron (T. Fe) included in the blast-furnace slag generated as a by-product by the blast furnace-converter process can make this blast-furnace slag usable as the composite oxide according to this embodiment.

(Steelmaking Slag, Such as Electric-Furnace Slag)

Recent years have seen a growing demand for expanding the use of cold iron sources (scrap) in the ironmaking industry. To build a circulating society, recycling iron sources is necessary and unavoidable. Further, given the demand for reducing the amount of carbon dioxide emission from the viewpoint of preventing global warming, it is essential to increase the amount of cold iron sources (scrap) to be used. Moreover, unlike iron ore that is iron oxide, cold iron sources (scrap) do not require a reduction step in their smelting process, which allows a reduction in the amount of carbon dioxide emission. From such a technical viewpoint, the composite oxide according to this embodiment has great technical significance in that steelmaking slag generated as a by-product by an electric furnace-based manufacturing process can be used as the slag to be included in the composite oxide. The constituent components of steelmaking slag generated as a by-product by the electric furnace-based manufacturing process are almost the same as those included in the composite oxide according to this embodiment. Therefore, steelmaking slag generated as a by-product by the electric furnace-based manufacturing method can be used as is, which has even greater technical significance.

(Steelmaking Slag, Such as Smelting-Reduction Furnace Slag)

Further, as an ironmaking process that does not use a blast furnace, the direct iron ore smelting reduction process has been proposed. The slag included in the composite oxide according to this embodiment may be steelmaking slag manufactured by the direct iron ore smelting reduction process. In the direct iron ore smelting reduction process, 60 to 70 mass% of oxygen included in iron ore is removed in a preliminary reduction furnace, and then this iron ore from which part of the oxygen has been removed is transferred to a smelting-reduction furnace that is held at a temperature higher than a temperature of the preliminary reduction furnace, to completely remove the oxygen. In the direct iron ore smelting reduction process, powder ore and powder coal are blown into the smelting-reduction furnace when removing the oxygen from the iron ore, which eliminates the need for sintering of the iron ore. As such, the direct iron ore smelting reduction process allows downsizing of an ironmaking facility and has a significant advantage in terms of environment as well. Moreover, in the direct iron ore smelting reduction process, elasticity of production and flexibility of raw materials are high. The reaction time of iron ore is extremely short compared with that in a blast furnace, and ironmaking operation can be stopped as necessary. With the direct iron ore smelting reduction process, the efficiency of facility investment increases and accordingly the ironmaking cost can be considerably reduced.

From these technical viewpoints, the composite oxide according to this embodiment has profound technical significance in terms of environment and ironmaking cost in that smelting-reduction furnace slag manufactured by the direct iron ore smelting reduction process can be used.

<Modifier, Such as Iron Oxide-Containing Modifier>

The modifier included in the composite oxide according to this embodiment can adjust the content of each component included in the composite oxide. Specifically, the modifier included in the composite oxide contains components that are needed to adjust the basicity B3 of the composite oxide, the total amount of iron (T. Fe) included in the composite oxide, etc. As examples of the modifier included in the composite oxide, an iron oxide-containing modifier, a calcium oxide-containing modifier, a magnesium oxide-containing modifier, an aluminum oxide-containing modifier, a silicon dioxide reagent, etc. can be named.

In the following, a description will be given of an iron oxide-containing modifier that can adjust the total amount of iron (T. Fe) that is the most important constituent component included in the composite oxide according to this embodiment.

(Iron Oxide-Containing Modifier)

The composite oxide according to this embodiment may further include an iron oxide-containing modifier as a modifier to be added to slag. As the iron oxide-containing modifier, any modifier can be used that contains iron oxide and can increase the total amount of iron (T. Fe) that is a constituent component of blast-furnace slag, and, for example, scale or a reagent can be used. As examples of the scale, a steel oxidized film, iron rust, etc. can be named that are iron oxides formed on a surface of steel as the steel is exposed to air at a high temperature in a steel manufacturing process. The composition of the scale varies according to the steel component that is the base metal.

As examples of the reagent, iron oxides such as iron oxide (II) and iron oxide (III) can be named. An iron oxide is an oxide of iron and is found as a mineral in the natural world. As examples of the mineral, iron(II) oxide (wustite), red iron ore (hematite), brown iron ore (limonite), magnetic iron ore (magnetite), and magnetic red iron ore (maghemite) can be named. Further, the following can be used as the reagent: $\alpha$-oxy iron hydroxide (goethite), $\beta$-oxy iron hydroxide (akaganeite), $\gamma$-oxy iron hydroxide (lepidocrocite), $\delta$-oxy iron hydroxide (feroxyhyte), iron hydroxide (II), iron hydroxide (III), etc. that can generate an iron oxide through a dehydration reaction caused by heating etc.

While the method of adding a modifier to slag is not particularly limited, a modifier may be added to slag in a molten state, or after a modifier is added to slag that is in a not completely molten state or a solid state, the slag with the modifier added thereto may be heated into a molten state. Specifically, as the method of adding a modifier to slag, for example, when the slag is blast-furnace slag, an iron oxide-containing modifier may be added to blast-furnace slag in a molten state that has been removed from a blast furnace, or after an iron oxide-containing modifier is mixed into blast-furnace slag that has reached a solid state, these blast-furnace slag and iron oxide-containing modifier may be heated and melted into a molten state.

Thus, while means for obtaining the composite oxide is not particularly limited, for example, a metal refining process or operating conditions for obtaining a by-product from municipal waste melting process, etc. may be adjusted so as to achieve the composition of the composite oxide according to this embodiment. Specifically, one example is to adjust the components of such a by-product so as to achieve the composition of the present invention. In particular, slag generated in a blast furnace or an electric furnace in a steel manufacturing process is composed mainly of CaO, $SiO_2$, $Al_2O_3$, and MgO, which make this slag suitable because the composition of the present invention can be achieved by adding thereto a modifier, such as an iron oxide-containing modifier including iron oxide. As for the method of adjusting the components, it is preferable that the modifier be added in a state where the slag has been melted or that the slag be melted after the modifier is added. For example, an iron oxide-containing modifier may be added to slag that is in a molten state immediately before or immediately after being discharged, or blast-furnace slag having turned into a solid and the modifier may be mixed together and then melted again.

By adding the modifier to the slag, the composite oxide is formed. The total amount of iron (T. Fe) included in the composite oxide is 0.4 mass% or more and 8.0 mass% or less. Limiting the total amount of iron (T. Fe) included in the composite oxide within such a range can drastically reduce the autogenous shrinkability of concrete and mortar that use this composite oxide as a raw material of blended cement and are formed by including this blended cement. Further, it can drastically reduce the autogenous shrinkability of concrete and mortar that use the composite oxide as an admixture of blended cement and are formed by including this blended cement.

When using the composite oxide according to this embodiment as an admixture of blended cement or a material of concrete or mortar that is formed by including this blended cement, the average grain diameter of the composite oxide may be set to 5 to 30 $\mu$m and the composite oxide may be pulverized into composite oxide fine powder. The composite oxide fine powder is manufactured by causing steel balls and the composite oxide to collide with each other inside a cylindrical drum as the drum rotates and thereby pulverizing the composite oxide. To pulverize the composite oxide, a finish pulverizer (finish pulverizing mill) may be used. The composite oxide powder having exited the finish pulverizer may be sorted according to the average grain diameter using a classifier, such as a separator.

It is preferable that the vitrification ratio of the composite oxide according to this embodiment be 90% or higher. The vitrification ratio is an index for determining whether a quality relating to the composite oxide is good or poor. The vitrification ratio of the composite oxide being 90% or higher is preferable because then a composite oxide for concrete having activity not lower than the activity of a composite oxide specified in JIS R 6206: 2013, for example, can be obtained. If the vitrification ratio of the composite oxide is within such a range, the composite oxide included in concrete manufactured using this composite oxide can achieve an activity index on 91st day of 100 or higher. That is, when the composite oxide according to this embodiment is used as an admixture of cement, it can achieve long-term strength equal to or higher than that of the cement.

The vitrification ratio of the composite oxide being lower than 90% is not preferable because then, due to a decrease in its latent hydraulicity, when the composite oxide is used as blended cement, the long-term strength of concrete manufactured from this cement becomes lower than that of concrete using ordinary cement. While the method for setting the vitrification ratio of the composite oxide to 90% or higher is not particularly limited, for example, rapidly cooling blast-furnace slag in a molten state by spraying it with water or air is preferable. Examples of methods of measuring the vitrification ratio include a method of obtaining a ratio between glass grains and crystal grains by visual observation using a polarization microscope, and a method of obtaining the ratio by performing XRD measurement.

As has been described above, the invention according to the second embodiment can provide a composite oxide suitable for manufacturing concrete with reduced autogenous shrinkage by adding a modifier to slag. In particular, according to the invention according to the second embodiment, since electric furnace slag generated as a by-product by the electric furnace-based manufacturing method can be used for the composite oxide, it is possible to promote the expansion of use of cold iron sources (scrap) in the ironmaking industry as well as meet the demand for reducing the amount of carbon dioxide emission from the viewpoint of preventing global warming.

[Third Embodiment]

A cement admixture or blended cement according to a third embodiment will be described. First, the blended cement according to this embodiment will be described. The blended cement according to this embodiment is characterized by including the composite oxide according to the above-described embodiment. That is, the blended cement according to this embodiment includes the composite oxide and other constituent components.

One of the other constituent components included in the blended cement according to this embodiment may be Portland cement. The composite oxide according to the above-described embodiment with at least Portland cement mixed therein constitutes the blended cement according to this embodiment. Here, blast-furnace cements are generally roughly classified into blast-furnace cement types A to C according to the amount of water-granulated blast-furnace slag. Specifically, in the blast-furnace cement type A, the amount of water-granulated blast-furnace slag is more than 5 and not more than 30%. In the blast-furnace cement type B, the amount of water-granulated blast-furnace slag is more than 30 and not more than 60%. In the blast-furnace cement type C, the amount of water-granulated blast-furnace slag is more than 60 and not more than 70%. That is, the blended cement according to this embodiment is blended cement in which the water-granulated blast-furnace slag included in the blast-furnace cement types A to C is substituted with composite oxide fine powder. Thus, the blended cement according to this embodiment can be substituted with the conventional blast-furnace cement types A to C.

Further, the Portland cement may be ordinary Portland cement. The ordinary Portland cement may include cement clinker. Here, the ordinary Portland cement is an easily available, most widely used type of cement. The blended cement according to this embodiment is obtained by containing ordinary Portland cement in the composite oxide. Therefore, the blended cement according to this embodiment generates less heat of hydration than ordinary Portland cement, and can reinforce the chemical resistance of the blended cement after it has hardened. As a result, the blended cement according to this embodiment can be suitably used for applications in civil works, such as bridge piers and dams, that require strength and durability. The blended cement according to this embodiment hardens by undergoing a chemical reaction with water to thereby turn into mortar or concrete, which can be used as a construction material for supporting social life.

Further, as examples of other constituent components included in the blended cement according to this embodiment, depending on a construction environment at site, early strength Portland cement that exhibits strength in a shorter period of time, and moderate heat Portland cement and low-heat Portland cement that generate smaller amounts of heat can be named. In addition, other constituent components included in the blended cement may be acid-proof cement that is composed mainly of calcium aluminate suitable for use on sulfate soil, such as in hot spring areas, white cement that is used for aesthetic purposes, ultrarapid hardening cement that is used for emergency repair, or eco-cement that uses domestic waste, such as remains of city refuse incineration as a raw material.

The blended cement according to this embodiment may include the composite oxide at a ratio of 10:90 to 90:10 as a mass ratio between the composite oxide and the other constituent components. When the blended cement includes the composite oxide according to the above-described embodiment and Portland cement, a substitution ratio of a unit composite oxide amount (SP) relative to a unit blended cement amount (C) expressed by the following Relational Expression (2) can be set to 0.10 to 0.90 as a composite oxide substitution ratio.

[Expression 2]

$$\text{Composite Oxide Substitution Ratio} = \frac{SP}{C+SP} \qquad (2)$$

In this Relational Expression (2), C represents the unit cement amount and SP represents the unit composite oxide amount.

Next, the cement admixture according to this embodiment will be described. The cement admixture according to this embodiment is characterized by including the composite oxide according to the above-described embodiment. The cement admixture according to this embodiment contributes to enhancing the workability in manufacturing concrete and improving the slump and the strength of concrete. Use of the cement admixture according to this embodiment allows all materials needed to manufacture concrete to be easily mixed together, even when the amount of water used is small.

The amount of the cement admixture according to this embodiment can be appropriately set according to the concrete to be manufactured. Further, the type and the amount of the composite oxide according to the above-described embodiment included in the cement admixture according to this embodiment can also be appropriately set.

As has been described above, the invention according to the third embodiment can provide concrete with drastically reduced autogenous shrinkability after a cement admixture or blended cement is manufactured using the composite oxide according to the above-described embodiment.

[Other Embodiments]

While the invention of the present application has been described above with reference to embodiments, the invention of the present application is not limited to the above-described embodiments. Various changes understandable to those skilled in the art can be made to the configurations and details of the invention of the present application within the technical scope of the invention of the present application. A system or a device that combines, in one way or another, separate characteristics included in the respective embodiments is also included in the technical scope of the present invention.

Examples

In the following, effects of the present invention will be specifically described based on examples, but the present invention is not limited to these examples.

(Invention Example 1)

<Manufacturing of Composite Oxide>

The composite oxide according to the present invention was manufactured. The composite oxide can be used as ground granulated slag for concrete. Specifically, the composite oxide according to an example of the present invention is manufactured by adding and mixing an iron oxide-containing modifier, and a CaO reagent, an $SiO_2$ reagent, an $Al_2O_3$ reagent, and an MgO reagent for adjustment of B3 into re-melted blast-furnace slag, spraying water on the obtained mixture so as to cool rapidly and solidify, and then finely pulverizing the obtained solidified body such that the specific surface area became 3000 to 5000 $cm^2$/g (specific surface area: $4000\pm1000$ $cm^2$/g). Thus, the composite oxide of the example of the present invention was produced by spraying water on the melted blast-furnace slag and the various reagents so as to cool rapidly and solidify, and then finely pulverizing the obtained solidified body such that the specific surface area became $4000\pm1000$ $cm^2$/g. In Invention Example 1, a triiron tetraoxide reagent was used as the iron oxide-containing modifier added to the blast-furnace slag.

<Vitrification Ratio of Composite Oxide>

The vitrification ratio of the composite oxide was measured. The measurement of the vitrification ratio was performed in accordance with a polarization microscopic observation method. Specifically, the vitrification ratio (%) of the composite oxide was measured by producing a thin sample of the composite oxide and performing observation using a polarization microscope in cross-polar configuration.

<Basicity B3 of Composite Oxide>

The basicity B3 of the composite oxide was measured. To measure the basicity B3, the content (mass%) of each of CaO, $SiO_2$, $Al_2O_3$, and MgO that were constituent components included in the composite oxide was measured. The basicity B3 that is a value calculated by Relational Expression (1) given above was 1.47.

[Expression 3]

$$\text{Basicity B3:}\quad \frac{(CaO+MgO+Al_2O_3)}{SiO_2} = 1.47$$

<Manufacturing of Concrete>

Using the composite oxide obtained in Invention Example 1, concrete was manufactured as a hardened body of a concrete precursor. Table 1 shows the constituent components of the concrete and the ratio of each constituent component. As shown in Table 1, ordinary Portland cement, river sand, and river gravel were used as the materials constituting the constituent components (materials) other than the composite oxide obtained in Invention Example 1, as a fine aggregate, and as a coarse aggregate, respectively.

The concrete hardened body was manufactured in accordance with the example of the composition shown in Table 1, and the autogenous shrinkage strain of the concrete as a hardened body at material age of 28 days was measured. A water-binder ratio expressed by Relational Expression (3) below that is obtained by dividing the unit water amount by the unit amount of the composite oxide and the unit amount of the ordinary Portland cement was set to 0.35. To manufacture a hardened body for measuring autogenous shrinkage strain, as the materials other than the composite oxide of the present invention, ordinary Portland cement: density 3.16 g/cm$^3$, river sand as a fine aggregate: density 2.46 g/cm$^3$, and river gravel as a coarse aggregate: density 2.62 g/cm$^3$ were used. Since the density of the composite oxide varies with the composition and the total amount of iron, the unit amounts of the fine aggregate and the coarse aggregate were adjusted as necessary.

[Expression 4]

$$\text{Water-binder Ratio} = \frac{W}{C+SP} \qquad (3)$$

[Table 1]

| Composition (kg/m$^3$) of hardened body for measuring autogenous shrinkage strain | | | | | | Water-binder ratio | Composite oxide substitution ratio |
|---|---|---|---|---|---|---|---|
| Composite oxide fine powder | Ordinary Portland cement | River sand | River gravel | High-performance water-reducing agent | Water | | |
| 413 | 83 | 777 | 827 | 1.0 | 173 | 0.35 | 0.83 |

The constituent components of concrete shown in Table 1 were mixed together and then kneaded to manufacture the concrete of Invention Example 1. The volume ratio (fine aggregate ratio) of the fine aggregate (river sand) in the sum of the volumes of the fine aggregate and the coarse aggregate was set to 50(%). Further, in the concrete obtained in Invention Example 1, the substitution ratio of the unit composite oxide amount (SP) relative to the unit cement amount (C) that is a value calculated by Relational Expression (2) given above was set to 0.83.

[Expression 5]

$$\text{Substitution ratio of Composite Oxide Amount}: \frac{SP}{C+SP} = 0.83$$

In Relational Expression (2) given above, W, C, and SP represent the unit water amount, the unit cement amount, and the composite oxide amount, respectively.

Further, in the concrete obtained in Invention Example 1, a water-binder ratio that is a value calculated by Relational Expression (3) given above and that is a ratio of a water content relative to a total of the unit cement amount (C) and the unit composite oxide amount (SP) was set to 0.35.

[Expression 6]

$$\text{Water-binder Ratio}: \frac{W}{C+SP} = 0.35$$

In this Relational Expression (3), W, C, and SP represent the unit water amount, the unit cement amount, and the unit composite oxide amount, respectively.

<Measurement of Autogenous Shrinkage Strain of Concrete and Activity Index of Composite Oxide>

A concrete precursor obtained by kneading the constituent components of concrete including the composite oxide was put in a mold, dried, and then released from the mold. Thus, the concrete precursor was used as a hardened body for measuring autogenous shrinkage strain to manufacture a concrete specimen.

In producing the hardened body for measuring autogenous shrinkage strain, a polycarboxylic high-performance water-reducing agent (a product "CHUPOL" manufactured by TAKEMOTO OIL & FAT Co., Ltd.) was used. The hardened body for measuring autogenous shrinkage strain was a 10 cm by 10 cm by 40 cm prism, and was produced with an embedded-type strain gauge embedded at a central portion. The hardened body was poured and then left to stand until the day after the pouring, with its surface covered with plastic wrap to prevent drying from the surface. Thereafter, the hardened body was released from the mold and cured in a state where the entire surface of the hardened body was covered with an aluminum foil and the whole hardened body was covered in a plastic bag. Thereafter, the autogenous shrinkage strain at material age of 28 days was measured.

Thereafter, the activity indices of the composite oxide at material ages of 7 days, 28 days, and 91 days were measured. The measurement of the activity indices of the composite oxide at material ages of 7 days, 28 days, and 91 days was performed in accordance with "Ground granulated blast-furnace slag for concrete" specified in JIS A 6206-2: 2010. Specifically, the activity index is a value (%) obtained by dividing the compressive strength of mortar in the form of a 40 mm by 40 mm by 160 mm prism, created by substituting 50 mass% of ordinary cement with a composite oxide, by the compressive strength of mortar that uses only ordinary cement. Therefore, the activity index of the composite oxide was measured by measuring each of the compressive strength of mortar created by substituting 50% of the cement with a composite oxide and the compressive strength of mortar that uses only cement. Table 2 shows the results of the measurements of the composite oxide and the concrete obtained in Invention Example 1.

(Invention Examples 2 to 41)

Composite oxides were manufactured in the same manner as in Invention Example 1, except that the content (mass%) of each constituent component constituting the composite oxide was changed and that the content (mass%) of the total amount of iron (T. Fe) was changed. Then, the basicity B3 and the vitrification ratio (%) of each manufactured composite oxide were calculated. Further, using the manufactured composite oxide, concrete as a hardened body was manufactured in the same manner as in Invention Example 1, and the autogenous shrinkage strain of this concrete was measured. Thereafter, the activity indices of the composite oxide at material ages of 7 days, 28 days, and 91 days were measured in the same manner as in Invention Example 1. Tables 2 to 4 show each of the results of the measurements of the composite oxides and the concretes obtained in of Invention Examples 2 to 41.

(Comparative Examples 1 to 19)

Composite oxides were manufactured in the same manner as in Invention Example 1, except that the content (mass%) of each constituent component constituting the composite oxide was changed and that the content (mass%) of the total amount of iron (T. Fe) was changed to less than 0.4% (Comparative Examples 1 to 9) and to more than 8.0% (Comparative Examples 10 to 19). Then, the basicity B3 and the vitrification ratio (%) of each manufactured composite oxide were calculated. Further, using the manufactured composite oxide, concrete as a hardened body was manufactured in the same manner as in Invention Example 1, and the autogenous shrinkage strain of this concrete was measured. Thereafter, the activity indices of the composite oxide at material ages of 7 days, 28 days, and 91 days were measured in the same manner as in Invention Example 1. Tables 4 and 5 show each of the results of the measurements of the composite oxides and the concretes obtained in Comparative Examples 1 to 19.

[Table 2]

| Test No. | Component composition of composite oxide fine powder | | | | | Physical properties of composite oxide fine powder | | | Evaluation of concrete | | | |
|---|---|---|---|---|---|---|---|---|---|---|---|---|
| | | | | | | | | | Activity index [-] | | | Autogenous shrinkage strain ($\times 10^{-6}$) |
| | CaO mass% | SiO$_2$ mass% | Al$_2$O$_3$ mass% | MgO mass% | T.Fe mass% | B3 [-] | Vitrification ratio % | Density g/cm$^3$ | Material age: 7days | Material age: 28days | Material age: 91 days | |
| Invention Example 1 | 37.6 | 39.9 | 13.6 | 7.60 | 0.62 | 1.47 | 99.8 | 2.92 | 61 | 87 | 105 | 89 |
| Invention Example 2 | 37.3 | 38.9 | 12.6 | 7.41 | 1.09 | 1.47 | 98.4 | 2.92 | 61 | 87 | 106 | 86 |
| Invention Example 3 | 37.5 | 39.8 | 12.8 | 6.77 | 2.37 | 1.44 | 97.1 | 2.90 | 58 | 87 | 103 | 85 |
| Invention Example 4 | 36.2 | 36.2 | 12.7 | 6.83 | 3.36 | 1.54 | 96.9 | 3.03 | 60 | 86 | 104 | 82 |
| Invention Example 5 | 33.3 | 37.6 | 12.9 | 6.48 | 6.34 | 1.40 | 96.3 | 3.11 | 57 | 83 | 101 | 73 |
| Invention Example 6 | 30.9 | 39.1 | 20.9 | 6.85 | 0.83 | 1.50 | 97.9 | 2.88 | 64 | 92 | 104 | 86 |
| Invention Example 7 | 30.6 | 38.6 | 19.5 | 6.66 | 1.43 | 1.45 | 96.3 | 2.86 | 63 | 90 | 101 | 83 |
| Invention Example 8 | 29.2 | 37.8 | 20.2 | 6.14 | 2.41 | 1.43 | 96.7 | 2.95 | 63 | 90 | 103 | 79 |
| Invention Example 9 | 27.1 | 35.6 | 20.2 | 6.70 | 3.96 | 1.54 | 95.1 | 2.96 | 63 | 86 | 105 | 77 |
| Invention Example 10 | 26.3 | 34.5 | 19.1 | 5.72 | 7.28 | 1.56 | 91.7 | 3.05 | 59 | 88 | 106 | 74 |
| Invention Example 11 | 42.3 | 35.6 | 13.9 | 6.42 | 0.95 | 1.76 | 97.1 | 2.93 | 63 | 98 | 115 | 95 |
| Invention Example 12 | 41.5 | 33.3 | 13.6 | 6.47 | 1.79 | 1.85 | 98.3 | 2.96 | 60 | 101 | 118 | 91 |
| Invention Example 13 | 41.4 | 34.7 | 13.6 | 6.52 | 3.26 | 1.77 | 95.5 | 3.00 | 61 | 96 | 116 | 87 |
| Invention Example 14 | 40.2 | 33.7 | 12.5 | 6.33 | 5.31 | 1.75 | 93.0 | 3.06 | 58 | 92 | 110 | 85 |
| Invention Example 15 | 39.7 | 31.9 | 11.4 | 6.08 | 7.85 | 1.79 | 90.4 | 3.14 | 57 | 91 | 107 | 82 |
| Invention Example 16 | 31.5 | 33.3 | 28.4 | 5.40 | 0.83 | 1.96 | 96.6 | 2.97 | 75 | 102 | 117 | 97 |

EP 4 699 996 A1

[Table 3]

| Test No. | Component composition of composite oxide fine powder | | | | | Physical properties of composite oxide fine powder | | | Evaluation of concrete | | | | |
|---|---|---|---|---|---|---|---|---|---|---|---|---|---|
| | | | | | | | | | Activity index [-] | | | | Autogenous shrinkage strain ($\times 10^{-6}$) |
| | CaO mass% | $SiO_2$ mass% | $Al_2O_3$ mass% | MgO mass% | T.Fe mass% | B3 [-] | Vitrification ratio % | Density g/cm$^3$ | Material age: 7days | Material age: 28days | Material age: 91days | | |
| Invention Example 17 | 28.7 | 31.3 | 27.9 | 5.24 | 1.21 | 1.97 | 95.5 | 2.98 | 73 | 105 | 115 | | 91 |
| Invention Example 18 | 30.2 | 32.1 | 27.2 | 5.26 | 2.06 | 1.95 | 95.6 | 3.04 | 70 | 98 | 122 | | 92 |
| Invention Example 19 | 30.4 | 32.3 | 27.3 | 5.09 | 3.50 | 1.94 | 94.6 | 3.04 | 67 | 102 | 110 | | 89 |
| Invention Example 20 | 29.2 | 31.2 | 26.3 | 4.94 | 6.56 | 1.94 | 93.7 | 3.18 | 65 | 101 | 118 | | 83 |
| Invention Example 21 | 39.7 | 30.7 | 16.6 | 7.58 | 0.90 | 2.08 | 99.3 | 2.97 | 66 | 100 | 116 | | 92 |
| Invention Example 22 | 37.0 | 29.6 | 15.9 | 7.93 | 1.10 | 2.17 | 98.5 | 2.90 | 63 | 99 | 119 | | 86 |
| Invention Example 23 | 40.2 | 31.0 | 17.0 | 7.50 | 2.27 | 2.04 | 96.9 | 2.98 | 61 | 101 | 119 | | 84 |
| Invention Example 24 | 38.8 | 28.6 | 15.3 | 7.57 | 4.12 | 2.12 | 96.4 | 3.01 | 60 | 104 | 117 | | 83 |
| Invention Example 25 | 37.7 | 28.7 | 15.6 | 7.45 | 6.04 | 2.07 | 95.4 | 3.14 | 57 | 110 | 111 | | 80 |
| Invention Example 26 | 36.4 | 29.5 | 15.2 | 3.58 | 0.95 | 2.21 | 94.2 | 2.92 | 86 | 106 | 121 | | 97 |
| Invention Example 27 | 46.4 | 29.3 | 15.1 | 3.63 | 1.28 | 2.21 | 93.8 | 2.90 | 86 | 101 | 122 | | 91 |
| Invention Example 28 | 45.8 | 27.9 | 15.4 | 3.03 | 1.96 | 2.31 | 93.0 | 2.91 | 82 | 104 | 116 | | 89 |
| Invention Example 29 | 44.8 | 28.2 | 14.8 | 2.82 | 3.10 | 2.22 | 92.5 | 3.02 | 81 | 103 | 107 | | 87 |
| Invention Example 30 | 42.6 | 27.5 | 14.6 | 2.93 | 6.26 | 2.19 | 88.7 | 3.08 | 72 | 88 | 98 | | 85 |
| Invention Example 31 | 45.6 | 29.0 | 19.3 | 4.81 | 0.78 | 2.40 | 94.0 | 2.93 | 79 | 98 | 110 | | 94 |
| Invention Example 32 | 42.9 | 28.3 | 18.9 | 4.54 | 1.05 | 2.34 | 94.2 | 2.95 | 80 | 97 | 112 | | 90 |

[Table 4]

| Test No. | Component composition of composite oxide fine powder | | | | | Physical properties of composite oxide fine powder | | | Evaluation of concrete | | | Autogenous shrinkage strain ($\times 10^{-6}$) |
|---|---|---|---|---|---|---|---|---|---|---|---|---|
| | CaO mass% | SiO$_2$ mass% | Al$_2$O$_3$ mass% | MgO mass% | T.Fe mass% | B3 [-] | Vitrification ratio % | Density g/cm$^3$ | Activity index [-] | | | |
| | | | | | | | | | Material age : 7 days | Material age : 28 days | Material age: 91 days | |
| Invention Example 33 | 45.4 | 28.4 | 18.2 | 4.06 | 2.24 | 2.39 | 91.9 | 2.95 | 75 | 96 | 103 | 89 |
| Invention Example 34 | 42.2 | 27.5 | 18.4 | 4.66 | 3.90 | 2.37 | 91.1 | 2.97 | 71 | 92 | 109 | 83 |
| Invention Example 35 | 40.1 | 26.4 | 17.1 | 3.89 | 6.98 | 2.32 | 89.5 | 3.09 | 63 | 80 | 96 | 77 |
| Invention Example 36 | 34.8 | 26.4 | 31.5 | 5.89 | 0.91 | 2.73 | 91.7 | 2.98 | 70 | 92 | 106 | 83 |
| Invention Example 37 | 35.1 | 25.6 | 31.1 | 5.20 | 1.42 | 2.79 | 90.0 | 2.98 | 68 | 93 | 103 | 75 |
| Invention Example 38 | 34.8 | 25.6 | 30.1 | 5.73 | 2.20 | 2.76 | 90.6 | 3.03 | 63 | 87 | 106 | 75 |
| Invention Example 39 | 32.8 | 25.9 | 30.5 | 5.15 | 4.64 | 2.65 | 87.1 | 3.05 | 61 | 86 | 98 | 73 |
| Invention Example 40 | 31.9 | 23.9 | 29.1 | 5.54 | 7.62 | 2.78 | 87.5 | 3.15 | 56 | 89 | 96 | 71 |
| Invention Example 41 | 43.0 | 34.7 | 15.7 | 6.10 | 0.42 | 1.87 | 99.5 | 2.90 | 63 | 96 | 111 | 94 |
| Comparative Example 1 | 43.0 | 36.0 | 14.0 | 6.60 | 0.10 | 1.77 | 96.0 | 2.90 | 65 | 97 | 112 | 137 |
| Comparative Example 2 | 37.0 | 40.5 | 13.4 | 7.66 | 0.00 | 1.43 | 98.8 | 2.91 | 59 | 84 | 104 | 108 |
| Comparative Example 3 | 20.7 | 39.7 | 30.4 | 7.03 | 0.00 | 1.47 | 97.8 | 2.93 | 66 | 92 | 107 | 110 |
| Comparative Example 4 | 42.4 | 36.0 | 14.0 | 7.24 | 0.00 | 1.77 | 97.4 | 2.93 | 63 | 98 | 114 | 131 |

(continued)

| Test No. | Component composition of composite oxide fine powder | | | | | Physical properties of composite oxide fine powder | | | Evaluation of concrete | | | | |
| | CaO mass% | SiO$_2$ mass% | Al$_2$O$_3$ mass% | MgO mass% | T.Fe mass% | B3 [-] | Vitrification ratio % | Density g/cm$^3$ | Activity index [-] | | | | Autogenous shrinkage strain ($\times 10^{-6}$) |
| | | | | | | | | | Material age : 7 days | Material age : 28 days | Material age : 91 days | | |
| Comparative Example 5 | 30.6 | 33.5 | 28.8 | 5.35 | 0.00 | 1.93 | 94.2 | 2.95 | 74 | 103 | 121 | | 141 |
| Comparative Example 6 | 40.2 | 32.0 | 17.0 | 7.78 | 0.00 | 2.03 | 98.6 | 2.98 | 67 | 99 | 118 | | 129 |
| Comparative Example 7 | 47.4 | 29.8 | 15.3 | 3.83 | 0.00 | 2.23 | 93.2 | 2.94 | 87 | 110 | 117 | | 137 |
| Comparative Example 8 | 46.4 | 28.4 | 19.5 | 4.97 | 0.00 | 2.49 | 93.7 | 2.94 | 81 | 95 | 114 | | 125 |

[Table 5]

| Test No. | Component composition of composite oxide fine powder | | | | | Physical properties of composite oxide fine powder | | | Evaluation of concrete | | | |
|---|---|---|---|---|---|---|---|---|---|---|---|---|
| | CaO mass% | SiO$_2$ mass% | Al$_2$O$_3$ mass% | MgO mass% | T.Fe mass% | B3 [-] | Vitrification ratio % | Density g/cm$^3$ | Activity index [-] | | | Autogenous shrinkage strain ($\times 10^{-6}$) |
| | | | | | | | | | Material age: 7 days | Material age: 28 days | Material age: 91 days | |
| Comparative Example 9 | 33.9 | 25.4 | 31.5 | 5.98 | 0.00 | 2.81 | 91.4 | 3.09 | 70 | 94 | 107 | 103 |
| Comparative Example 10 | 34.7 | 35.4 | 12.7 | 6.65 | 8.38 | 1.52 | 94.3 | 3.09 | 53 | 91 | 105 | 73 |
| Comparative Example 11 | 18.9 | 36.7 | 28.0 | 6.16 | 9.54 | 1.44 | 90.9 | 3.21 | 53 | 95 | 103 | 62 |
| Comparative Example 12 | 37.0 | 30.0 | 11.0 | 5.70 | 9.50 | 1.79 | 84.0 | 3.18 | 50 | 87 | 105 | 76 |
| Comparative Example 13 | 28.3 | 30.7 | 26.0 | 4.77 | 8.62 | 1.92 | 89.0 | 3.18 | 53 | 97 | 118 | 77 |
| Comparative Example 14 | 35.9 | 29.5 | 14.9 | 7.26 | 9.32 | 1.97 | 92.3 | 3.13 | 49 | 86 | 114 | 71 |
| Comparative Example 15 | 42.5 | 27.3 | 13.9 | 3.29 | 9.66 | 2.19 | 86.3 | 3.20 | 66 | 77 | 89 | 71 |
| Comparative Example 16 | 40.8 | 26.4 | 17.8 | 4.25 | 8.56 | 2.38 | 87.7 | 3.13 | 59 | 76 | 91 | 79 |
| Comparative Example 17 | 31.6 | 24.7 | 28.7 | 5.12 | 8.32 | 2.65 | 85.1 | 3.14 | 51 | 74 | 89 | 67 |
| Comparative Example 18 | 28.7 | 44.2 | 12.4 | 7.75 | 0.81 | 1.18 | 99.1 | 2.64 | 47 | 70 | 91 | 95 |
| Comparative Example 19 | 49.9 | 23.3 | 15.9 | 7.05 | 0.70 | 3.13 | 53.8 | 2.99 | 42 | 58 | 76 | 47 |

EP 4 699 996 A1

As is clear also from Tables 2 to 5, in Invention Examples 1 to 41 in which the value of the basicity B3 of the composite oxide was 1.4 or higher and 3.0 or lower and the total amount of iron (T. Fe) was 0.4 mass% or more and 8.0 mass% or less, the autogenous shrinkage strain was smaller than $100 \times 10^{-6}$. This value is smaller than the value of the autogenous shrinkage strain of the concrete manufactured using blast-furnace slag shown in Comparative Example 1. Thus, it was confirmed that when the composite oxides of Invention Examples 1 to 41 were used as a cement admixture, the autogenous shrinkage strain of the obtained concrete became small.

The values of the activity indices of the composite oxides of Invention Examples 1 to 41 at the material ages of 7 days, 28 days, and 91 days are equal to or higher than the reference values of ground granulated blast-furnace slag 4000 specified in JIS A 6206: 2013. Thus, it was also confirmed that the composite oxides of Invention Examples 1 to 41 had sufficient latent hydraulicity. In Comparative Examples 2 to 9 in which the total amount of iron (T. Fe) in the composite oxide was set to less than 0.4 mass%, the autogenous shrinkage strain of the concrete manufactured using the composite oxide was $100 \times 10^{-6}$ or larger, and thus the reducing effect on the autogenous shrinkage strain was small.

In Comparative Examples 10 to 17 in which the total amount of iron (T. Fe) in the composite oxide was more than 8.0 mass%, while the autogenous shrinkage strain of the concrete manufactured using the composite oxide was small, the activity indices of the composite oxide fell below the reference values of ground granulated blast-furnace slag 4000 specified in JIS A 6206: 2013, which indicates reduced latent hydraulicity. Further, in Comparative Example 18 and Comparative Example 19 in which the value of the basicity B3 of the composite oxide was set to lower than 1.4 and higher than 3.0, respectively, the activity indices of the composite oxides were smaller lower than those in Comparative Examples 10 to 17. Thus, it was confirmed that these composite oxides did not have sufficient latent hydraulicity.

Further, from Tables 2 to 5, in almost all of Invention Examples 1 to 41 in which the total amount of iron (T. Fe) included in the composite oxide was set to 0.4 mass% or more but 8.00 mass% or less, the vitrification ratio of the composite oxide was 90% or higher. Further, it was revealed that the activity indices of the composite oxides manufactured in Invention Examples 1 to 41 were equal to or higher than a value that ordinary ground granulated blast-furnace slag should meet as specified in JIS A 6206: 2013. Thus, it was confirmed that the composite oxides according to the examples of the present invention have latent hydraulicity equivalent to that of ordinary ground granulated blast-furnace slag.

As has been described above, it was demonstrated that with the basicity B3 and the total amount of iron (T. Fe) appropriately set, the composite oxide according to the present invention can, while securing latent hydraulicity, drastically reduce the autogenous shrinkage strain of concrete manufactured by curing a concrete precursor including this composite oxide.

Industrial Applicability

The invention according to the present invention can provide concrete with drastically reduced autogenous shrinkage by using, for the concrete, a cement raw material that is partially substituted with a composite oxide. Thus, the invention contributes to development of related industries, such as the ironmaking industry and the civil engineering industry, which makes it industrially extremely useful.

**Claims**

1.   A composite oxide including CaO, MgO, and $Al_2O_3$, **characterized in that**:

   a basicity B3 is 1.4 or higher and 3.0 or lower, the basicity B3 being a value obtained by dividing a sum of a mass percentage of the CaO, a mass percentage of the MgO, and a mass percentage of the $Al_2O_3$ included in the composite oxide by a mass percentage of $SiO_2$ included in the composite oxide;
   a total amount of iron included in the composite oxide is 0.4 mass% or more and 8.0 mass% or less; and
   a specific surface area of the composite oxide is 3000 $cm^2/g$ or larger.

2.   The composite oxide according to claim 1, wherein
   the composite oxide is obtained by adding a modifier to slag.

3.   The composite oxide according to claim 1, wherein
   a vitrification ratio of the composite oxide is 90% or higher.

4.   A cement admixture or blended cement comprising the composite oxide according to claim 1.

5.   Concrete comprising the composite oxide according to claim 1.

**EP 4 699 996 A1**

## INTERNATIONAL SEARCH REPORT

| International application No. |
| --- |
| **PCT/JP2024/011686** |

**A. CLASSIFICATION OF SUBJECT MATTER**

*C04B 18/14*(2006.01)i; *C04B 28/08*(2006.01)i; *C04B 111/34*(2006.01)n
FI: C04B18/14 A; C04B28/08; C04B111:34

According to International Patent Classification (IPC) or to both national classification and IPC

**B. FIELDS SEARCHED**

Minimum documentation searched (classification system followed by classification symbols)

C04B18/14; C04B28/08; C04B111/34; C04B5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | 沼田晋一ほか, 我が国水砕スラグ及びこれを加工した高炉スラグ微粉末の品質, コンクリート工学年次論文集, 1989, vol. 11, no. 1, pp. 343-348, particularly, see p. 345, table 1, (NUMATA, Shinichi et al. The qualities of Japanese granulated blast furnace slags for cementitious materials. Proceedings of the Japan Concrete Institute.)<br>p. 345, table 1 | 1-5 |
| X | 佐川孝広, 高炉スラグ微粉末の水和活性と体積変化に及ぼす化学組成の影響, コンクリート工学年次論文集, 2019, vol. 41, no. 1, pp. 131-136, particularly, see p. 131, table 1, (SAGAWA, Takahiro. Proceedings of the Japan Concrete Institute.), non-official translation (Effect of chemical composition on hydration activity and volume change of ground granulated blast furnace slag fine powder)<br>p. 131, table 1 | 1-5 |
| X | JP 2013-184831 A (UBE INDUSTRIES, LTD.) 19 September 2013 (2013-09-19)<br>paragraphs [0042]-[0049], table 2 | 1–5 |

☑ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **28 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/011686** |

| C. | DOCUMENTS CONSIDERED TO BE RELEVANT | |
|---|---|---|
| Category* | Citation of document, with indication, where appropriate, of the relevant passages | Relevant to claim No. |
| A | ３．高炉スラグ微粉末の性質, 新　セメント・コンクリート用混和材料, 技術書院, pp. 28-30, ISBN:978-4-7654-3263-4, particularly, p. 29, non-official translation (3. Properties of ground granulated blast furnace slag fine powder. The new cement and concrete admixtures. GIJUTSU SHOIN KK.) particularly, p. 29 | 1-5 |

Form PCT/ISA/210 (second sheet) (July 2022)

## INTERNATIONAL SEARCH REPORT
### Information on patent family members

International application No.

**PCT/JP2024/011686**

| Patent document cited in search report | Publication date (day/month/year) | Patent family member(s) | Publication date (day/month/year) |
|---|---|---|---|
| JP 2013-184831 A | 19 September 2013 | (Family: none) | |

Form PCT/ISA/210 (patent family annex) (July 2022)

**EP 4 699 996 A1**

**Patent documents cited in the description**

- JP 2016023105 A
- JP 2022089256 A
- JP 2011006305 A